Europäisches Patentamt

(19) European Patent Office

Office européen des brevets

(11) Numéro de publication : **0 247 908 B1**

(12) # FASCICULE DE BREVET EUROPEEN

(45) Date de publication du fascicule du brevet :
**05.06.91 Bulletin 91/23**

(51) Int. Cl.$^5$ : **G01F 23/28**

(21) Numéro de dépôt : **87400694.3**

(22) Date de dépôt : **27.03.87**

(54) **Capteur de niveau de liquide à ondes élastiques guidées.**

(30) Priorité : **28.03.86 FR 8604532**

(43) Date de publication de la demande :
**02.12.87 Bulletin 87/49**

(45) Mention de la délivrance du brevet :
**05.06.91 Bulletin 91/23**

(84) Etats contractants désignés :
**BE DE ES FR GB IT NL**

(56) Documents cités :
**AU-B- 543 420**
**FR-A- 2 402 861**
**US-A- 3 394 589**
**US-A- 3 656 134**
**ELECTRONIC ENGINEERING, vol. 53, no. 659, novembre 1981, pages 159-168, London, GB; R.M. LANGDON: "Vibratory process control transducers"**

(73) Titulaire : **UNIVERSITE PIERRE ET MARIE CURIE**
**4, place Jussieu**
**F-75252 Paris Cédex 05 (FR)**

(72) Inventeur : **Dieulesaint, Eugène**
**2 Avenue Francis Berthier**
**F-94100 Saint-Maur (FR)**
Inventeur : **Royer, Daniel**
**11 rue Edouard Branly**
**F-91700 Sainte Geneviève des Bois (FR)**

(74) Mandataire : **Thévenet, Jean-Bruno**
**Cabinet BEAU DE LOMENIE 55 rue d'Amsterdam**
**F-75008 Paris (FR)**

## Description

La présente invention a pour objet un capteur de niveau de liquide à ondes élastiques guidées, comprenant un premier transducteur fixe situé hors du liquide pour émettre une impulsion élastique incidente se propageant au sein d'un guide allongé dont la partie inférieure est plongée dans le liquide, un second transducteur situé hors du liquide pour recevoir l'impulsion élastique émise par le premier transducteur et transmise par le guide et des circuits électroniques de mesure du temps écoulé entre l'émission d'une impulsion élastique incidente par le premier transducteur et la réception ultérieure de cette même onde élastique par le second transducteur.

On a déjà proposé des capteurs de niveau de ce type dans lesquels le transducteur émetteur est monté de façon fixe au voisinage de l'extrémité supérieure d'un guide magnétostrictif constitué par une tige métallique tandis que le transducteur récepteur est monté coulissant sur le guide et se trouve placé sur un flotteur dont la position varie en fonction du niveau de liquide qui est à mesurer.

Un tel mode de réalisation présente plusieurs inconvénients. En effet, il est nécessaire d'utiliser un câble souple de liaison entre le transducteur récepteur mobile et les circuits électroniques de détection et de traitement du signal montés à poste fixe. La présence de signaux électriques dans le transducteur récepteur placé au niveau de la surface du liquide peut affecter la sécurité du système et notamment créer des risques d'étincelles qui, dans certaines conditions, en particulier si le liquide est lui-même inflammable et volatile, comme dans le cas d'essence par exemple, peut conduire à des accidents.

D'une manière générale, la présence d'un capteur flottant à l'intérieur même de la cuve où se trouve stocké le liquide dont le niveau est à mesurer est peu souhaitable car le capteur se trouve alors placé dans une atmosphère ambiante qui peut être corrosive ou soumise à des températures susceptibles d'affecter l'intégrité du capteur.

On connaît également, pour mesurer des distances, des systèmes radar à ondes non guidées. Ces systèmes sont cependant coûteux, présentent des inconvénients du fait de leur sensibilité à l'environnement (effet mirage) et sont peu adaptés à des distances inférieures à quelques centaines ou quelques dizaines de mètres.

On connaît encore, notamment par le document de brevet US-A-2 713 623, un dispositif de mesure du niveau d'un liquide mettant en oeuvre un tube plongé dans le liquide et comportant à son extrémité supérieure non immergée un transducteur pour créer dans le tube des ondes de compression radiales et pour détecter les échos dûs à la réflexion des ondes de compression par l'interface liquide-air. Le tube est par ailleurs muni d'encoches radiales réparties sur toute la longueur du tube pour créer des échos de calibrage. Un tel dispositif n'est pas satisfaisant du fait de la multiplicité des échos parasites qui créent des phénomènes d'interférences et rendent difficile une exploitation des signaux reçus. En particulier, chaque signal réfléchi par une fente ou encoche se réfléchit également sur les autres fentes et le signal réfléchi par l'interface gaz-liquide se réfléchit en outre lui-même sur toutes les fentes. La superposition de l'ensemble des échos parasites, même de faible amplitude, peut engendrer un signal plus grand que le signal utile provenant de l'interface. Par ailleurs, dans le cas d'un fluide dans lequel se trouvent des particules solides en suspension ou des boues, les fentes risquent facilement de servir de point d'ancrage pour des impuretés qui perturbent le bon fonctionnement du système de mesure.

La présente invention vise à remédier aux inconvénients précités et à permettre la mesure précise et fiable de niveaux de liquide sans qu'il soit nécessaire de mettre en oeuvre un capteur mobile en contact avec le liquide dont le niveau est à mesurer, et sans qu'il soit nécessaire de mettre en oeuvre des circuits électroniques complexes.

L'invention a encore pour but de permettre de réaliser de façon efficace et à un coût relativement réduit des mesures de niveau de liquide dans des cuves ou enceintes de grande hauteur, même lorsque l'atmosphère au-dessus du liquide est très agressive ou lorsque le liquide contient des impuretés.

Ces buts sont atteints grâce à un capteur de niveau de liquide à ondes élastiques guidées du type défini en tête de la description dans lequel, conformément à l'invention le guide allongé comprend au moins un tube lisse exempt de discontinuités dans le sens longitudinal, le second transducteur est situé dans une position fixe voisine de celle du premier transducteur, pour recevoir l'impulsion élastique émise par le premier transducteur après réflexion de celle-ci à la surface du liquide dans lequel est plongée la partie inférieure du guide, et le premier transducteur est agencé de manière à créer dans le guide, des déformations radiales alternatives périodiques antisymétriques essentiellement selon un premier plan axial du guide tandis que les déformations radiales créées sont pratiquement nulles selon un second plan axial perpendiculaire audit premier plan axial.

On entend par déformations radiales antisymétriques, des déformations selon un mode de flexion qui sont de même sens dans les deux parois du tube opposées l'une à l'autre, dans le premier plan axial.

Conformément à un premier mode de réalisation de l'invention, le guide comprend un premier tronçon de guide dont une extrémité supérieure porte le premier transducteur et la partie inférieure est plongée dans le liquide, et un second tronçon de guide parallèle au premier tronçon de guide mais indépendant de celui-ci, dont une extrémité supérieure voisine de l'extrémité supérieure du premier tronçon de guide porte le second transducteur et la partie inférieure est plongée dans le liquide.

Conformément à un autre mode de réalisation de l'invention, plus compact, le guide est constitué par un élément métallique allongé unique dont l'extrémité supérieure porte les premier et second transducteurs fixes et la partie inférieure est plongée dans le liquide.

Afin d'accroître la sensibilité de la détection, et partant la précision de la mesure de niveau, selon une caractéristique particulière de l'invention, le premier transducteur comprend plusieurs éléments montés électriquement en parallèle et disposés sur le guide en des emplacements prédéterminés définissant un code de manière à engendrer une suite d'impulsions élastiques et le second transducteur comprend plusieurs éléments montés électriquement en parallèle et disposés sur le guide en des emplacements prédéterminés définissant la réplique dudit code défini par le premier transducteur pour effectuer une autocorrélation du signal émis par le premier transducteur.

Selon un mode de réalisation avantageux de la présente invention, particulièrement simple et bon marché, les premier et second transducteurs sont constitués par un transducteur unique.

Dans ce cas, les circuits électroniques de mesure du temps écoulé entre l'émission d'une impulsion élastique incidente par le transducteur et la réception ultérieure par le transducteur de cette même onde élastique guidée et réfléchie par l'interface guide-liquide comprend en outre des portes pour aiguiller les impulsions électriques appliquées au transducteur ou provenant de celui-ci.

Selon une autre caractéristique particulière, la partie de l'onde élastique incidente réfléchie par une extrémité fixe du guide est appliquée à un dispositif de mesure de correction ou de contrôle d'intégrité du guide.

D'autres caractéristiques et avantages de l'invention ressortiront de la description suivante de modes particuliers de réalisation, donnés à titre d'exemples, en référence aux dessins annexés, sur lesquels :

– la figure 1 est une vue schématique d'ensemble d'un premier mode de réalisation d'un capteur selon l'invention,

– la figure 2 est une vue schématique d'ensemble d'un second mode de réalisation d'un capteur selon l'invention,

– les figures 3 et 4 sont des chronogrammes montrant les signaux disponibles en différents points des circuits électroniques du capteur de la figure 1,

– les figures 5 à 8 sont des chronogrammes montrant les signaux disponibles en différents points des circuits électroniques du capteur de la figure 2,

– la figure 9 représente une partie du capteur de la figure 1 avec des transducteurs particuliers permettant un filtrage adapté,

– la figure 10 montre la forme des impulsions reçues successivement par le transducteur récepteur de la figure 9,

– la figure 11 représente une partie du capteur de la figure 1 avec une variante possible pour la configuration du guide,

– les figures 12 à 14 montrent des exemples de transducteurs piézoélectriques dont les formes sont adaptées pour créer des déformations dans le tube guide selon un mode préférentiel de propagation,

– la figure 15 montre de façon schématique en coupe axiale un tube guide et ses déformations selon un mode préférentiel de propagation des ondes acoustiques,

– les figures 16 et 17 représentent des sections transversales selon les lignes XVI-XVI et XVII-XVII de la figure 15 ; et

– la figure 18 montre en section transversale une autre forme de guide possible avec un transducteur.

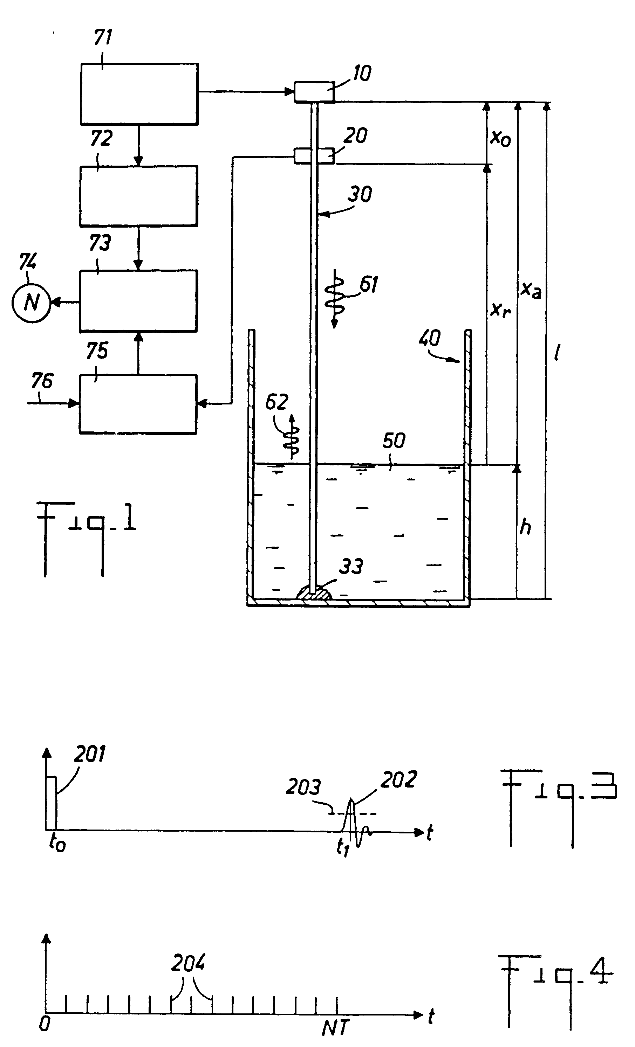

Le capteur de niveau à ondes élastiques guidées représenté sur la figure 1 comprend essentiellement un guide par exemple métallique 30 réalisé sous la forme d'un tube rectiligne lisse sans aspérités ni discontinuités. Le guide 30 est placé verticalement dans le liquide 50 dont on veut mesurer le niveau et qui est contenu dans une cuve 40 qui peut être ouverte ou fermée à sa partie supérieure.

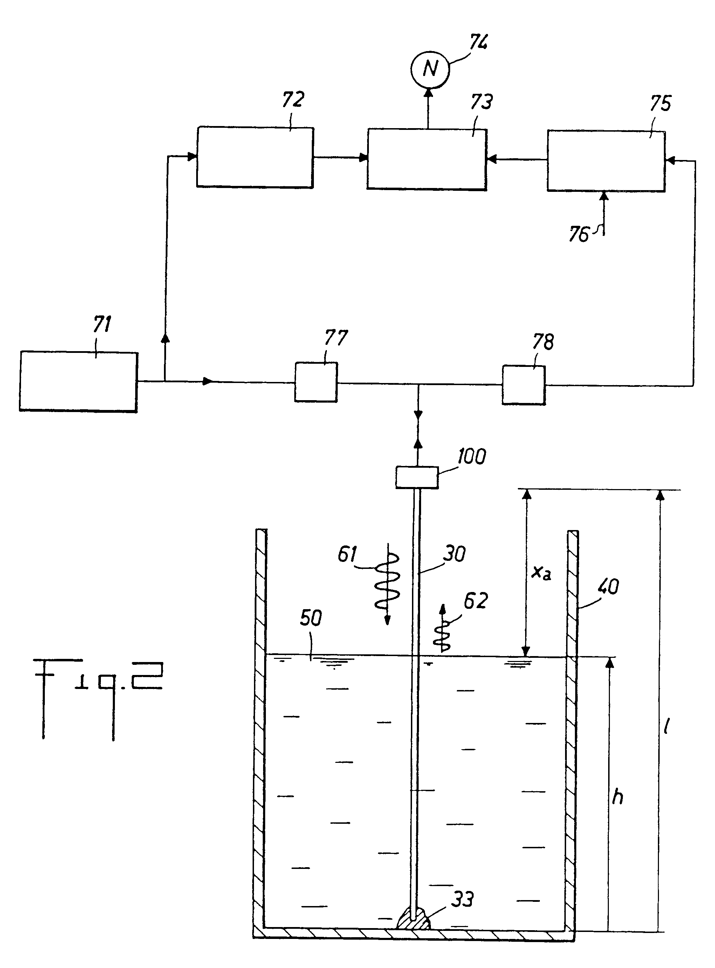

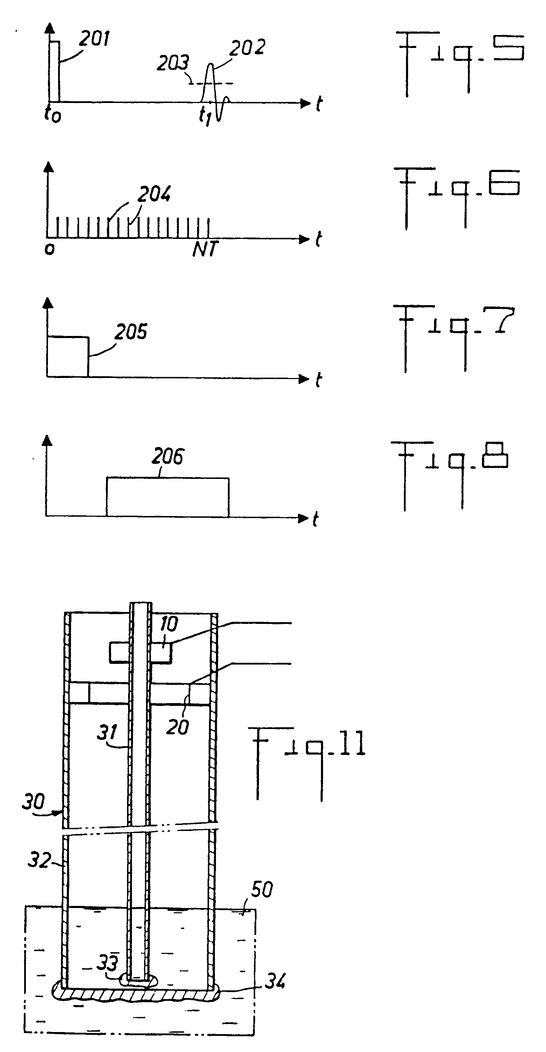

Un premier transducteur 10, de type piézoélectrique ou magnétostrictif, est disposé à l'extrémité supérieure du guide 30 pour engendrer dans celui-ci une impulsion élastique incidente 61, ou un train d'ondes élastiques, lorsqu'il reçoit d'un circuit générateur d'impulsions 71 à un instant $t_0$ une impulsion électrique 201 (fig 3).

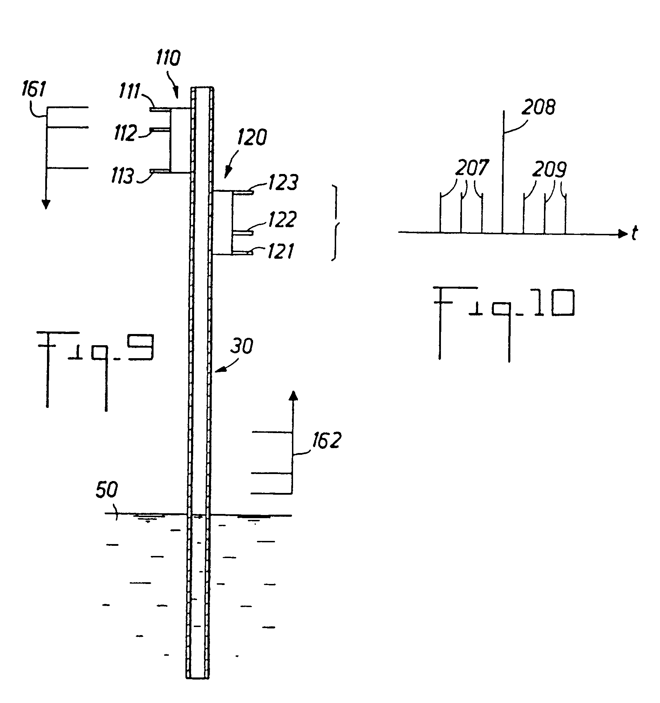

Un second transducteur 20, qui peut être de type piézoélectrique ou magnétostrictif, ou encore de type optique, est disposé sur le guide 30 au-dessous du premier transducteur émetteur 10 et à une faible distance $x_0$ de celui-ci. Ce second transducteur 20 reçoit la partie 62 de l'impulsion élastique incidente 61, ou du train d'ondes élastiques incidentes, qui a été réfléchie dans le guide 30 par l'interface guide 30-liquide 50, c'est-à-dire par la surface supérieure du volume du liquide 50. L'impulsion élastique réfléchie 62 est convertie en un signal électrique 202 à un instant $t_1$ (Fig 3) par le transducteur-récepteur 20. L'impulsion électrique 202 est appliquée à l'une des entrées d'un circuit comparateur 75 dont l'autre entrée 76 reçoit un signal 203 définissant un seuil prédéterminé. Lorsque le transducteur 20 a émis une impulsion 202 dont l'amplitude dépasse le seuil choisi 203, le comparateur 75 émet un signal de commande de l'arrêt d'un compteur 73 qui reçoit des impulsions 204 (Fig 4) émises par une horloge 72 avec une période T. L'horloge 72 et le compteur 73 sont eux-mêmes déclenchés par le circuit 71 à l'instant $t_0$ auquel une impulsion électrique 201 est appliquée au transducteur-émetteur 10. Le compteur 73 initialement remis à zéro compte ainsi les impulsions périodiques 204 émises par l'horloge 72 entre l'instant initial $t_0$ auquel le transducteur 10 émet une onde élastique incidente 61 et l'instant final $t_1$ auquel le transducteur 20 reçoit une onde élastique 62 réfléchie par la surface du liquide 50. Le nombre total N d'impulsions 204 comptées pendant l'intervalle de temps $t_1-t_0$ est enregistré dans une mémoire 74, puis converti en une information de niveau de liquide.

Compte tenu du fait que la vitesse V des impulsions élastiques incidente 61 et réfléchie 62 dans le guide 30 est constante et connue, de même que la période T des impulsions d'horloge 204 et la distance $x_0$ entre les transducteurs émetteur 10 et récepteur 20, la hauteur h du liquide 50 dans la cuve 40 peut être facilement déterminée à partir du nombre N d'impulsions compté pendant l'intervalle de temps $t_1-t_0$.

Si l est la distance entre le transducteur émetteur 10 et le fond de la cuve 40, si $x_a$ est la distance entre le niveau de liquide et le transducteur émetteur 10 et si $x_2$ est la distance entre le niveau de liquide et le transducteur récepteur 20, on a les relations suivantes :

$$x_a + x_r = VNT \quad (1)$$

$$x_a - x_r = x_o \quad (2)$$

d'où

$$h = l - 5x_a = l - (VNT + x_o/2) \quad (3)$$

Il peut être avantageux de placer une matière absorbante 33 à l'extrémité inférieure du guide 30 voisine du fond de la cuve 40. Cette matière absorbante 33 permet d'absorber la partie de l'onde incidente 61 qui n'est pas réfléchie à la surface du liquide 50. Toutefois, on peut noter que la partie de l'onde incidente 61 qui, en l'absence de la matière absorbante 33, serait réfléchie à l'extrémité inférieure immergée du guide 30 ne parviendrait au transducteur récepteur 20 qu'avec un certain retard, c'est-à-dire à un instant postérieur à l'instant $t_1$ de la figure 3, et par suite ne perturberait pas la mesure puisque le compteur 75 aurait déjà été arrêté dès l'instant $t_1$.

L'écho constitué par la partie de l'onde incidente 61 réfléchie par l'extrémité inférieure du guide 30 peut d'ailleurs être utilisé, après détection par le transducteur récepteur 20, pour fournir, par comparaison de son instant $t_2$ de détection avec l'instant $t_1$ de détection de l'écho 62 réfléchi par la surface du liquide 50, une information redondante de mesure ou encore une information de contrôle de l'intégrité du guide 30, une rupture éventuelle de ce guide se traduisant par une modification de la localisation de l'extrémité inférieure du guide.

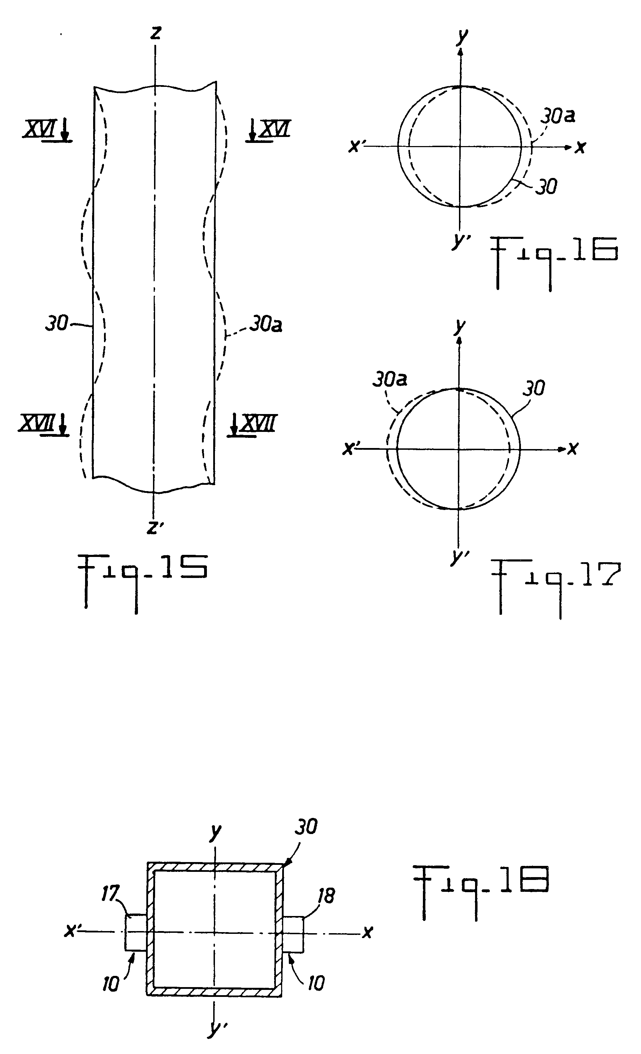

Par ailleurs, on a représenté sur la figure 1 un transducteur émetteur 10 placé à l'extrémité supérieure du guide 30. Selon une variante de réalisation (représentée par exemple sur les figures 9 et 11), le transducteur émetteur 10, peut être placé à une faible distance connue au-dessous de l'extrémité supérieure du guide 30. Ceci permet d'utiliser l'onde élastique incidente émise vers le haut du guide 30 (en même temps que l'onde 61 dirigée vers le bas) et réfléchie à l'extrémité supérieure du guide 30, pour fournir à l'aide du transducteur récepteur 20 une information de correction tenant compte par exemple de la température ambiante. En effet, l'onde élastique dirigée vers le haut et réfléchie vers le transducteur récepteur 20 correspond à un parcours de référence fixe. La variation de l'intervalle de temps entre l'instant $t_0$ d'émission de l'onde incidente et l'instant $t_3$ de réception par le transducteur récepteur 20 de l'onde réfléchie par l'extrémité libre supérieure du guide 30 traduit une variation des conditions physiques de l'atmosphère située au-dessus du liquide dont le niveau est à mesurer. Dans le cas de la mise en oeuvre d'une telle mesure de correction, les circuits électroniques incluent un compteur supplémentaire ou un circuit temporisateur pour discriminer la première onde de correction réfléchie par la surface du liquide. Dans ce mode de réalisation, l'instant $t_3$ de retour de l'onde réfléchie par l'extrémité supérieure du guide est en principe antérieur à l'instant $t_1$ de retour de l'onde 62 réfléchie par la surface du liquide.

La figure 2 montre un autre mode de réalisation de capteur de niveau, qui est dans l'ensemble semblable au capteur de la figure 1, mais ne comporte qu'un seul transducteur 100 qui joue le rôle à la fois du transducteur émetteur 10 et du transducteur récepteur 20 du capteur de la figure 1. Dans ce cas, le fonctionnement est très semblable à celui du capteur de la figure 1 et les éléments communs portent les mêmes numéros de référence. Toutefois, dans le cas du capteur de la figure 2 à transducteur 100 unique, des portes électroniques 77 et 78 sont avantageusement interposées, l'une (porte 77) entre le générateur d'impulsions 71 et le transducteur 100 et l'autre (porte 78) entre le transducteur 100 et le comparateur 75.

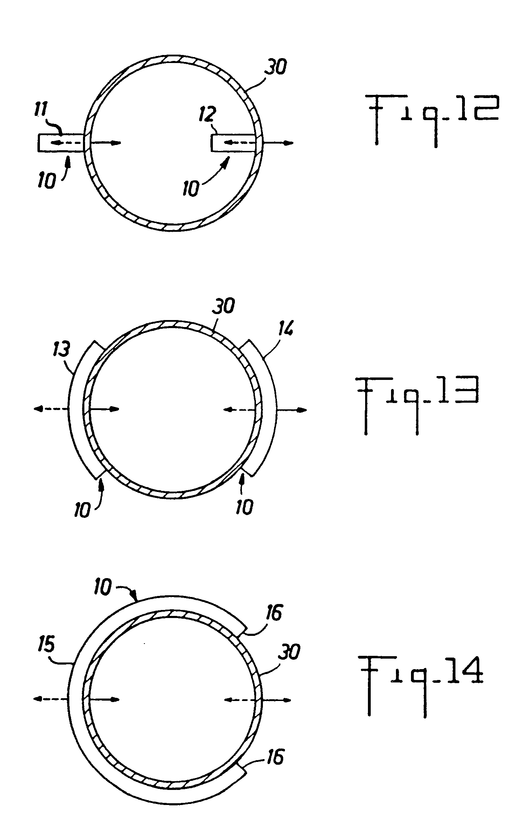

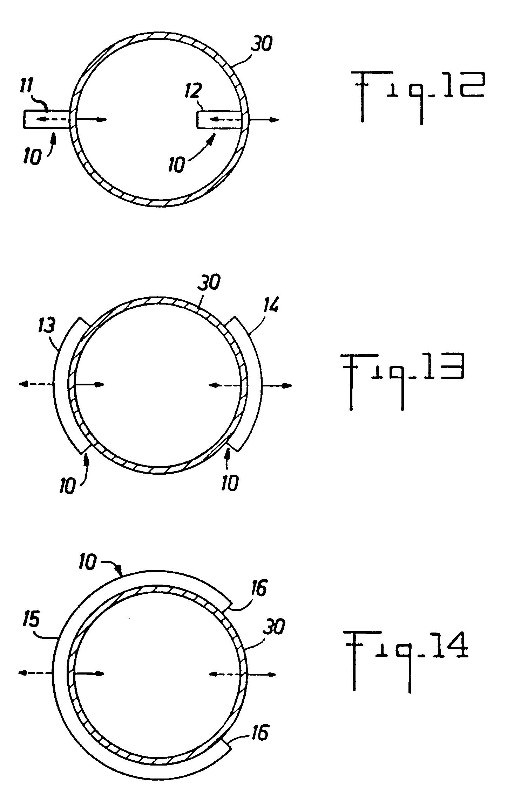

Le fonctionnement du capteur de la figure 2 sera mieux compris si l'on considère les diagrammes des temps des figures 5 à 8.

A l'instant initial $t_0$, le générateur d'impulsions 71 émet une impulsion 201 qui est appliquée par la porte 77 alors ouverte (signal 205 de niveau haut sur la figure 7) sur le transducteur 100 qui engendre une onde élastique incidente dans le guide 30. Simultanément, l'horloge 72 est mise en marche et envoie des impulsions périodiques 204 de période T au compteur 73 précédemment remis à zéro. La porte 78 reste elle-même fermée pendant tout le temps où la porte 77 est ouverte (signal 206 de niveau bas sur la figure 8).

A l'instant $t_1$, l'onde élastique 62 réfléchie par la surface du liquide 50 est reçue par le transducteur 100 qui émet un signal électrique impulsionnel 202 transmis à une entrée du comparateur 75 par la porte 78 alors ouverte (signal 206 de niveau haut), tandis que la porte 77 est elle-même fermée (signal 205 de niveau bas).

Les circuits 71 à 76 fonctionnent eux-mêmes de façon tout à fait identique dans le cas des figures 1 et 2 et dans le mode de réalisation de la figure 2, pour lequel la distance $x_0$ entre les transducteurs émetteur et récepteur est réduite à zéro, la relation (3) devient simplement :

$$h = I - VNT/2 \quad (4)$$

h, I, V, N et T ayant les mêmes significations que ci-dessus en relation aux équations (1) à (3).

L'onde élastique incidente 61 créée dans le guide 30 par le transducteur émetteur 10 ou 100 peut être avec ou sans fréquence porteuse et peut être plus ou moins complexe.

On a représenté schématiquement sur la figure 9 le cas de transducteurs émetteur 110 et récepteur 120 constitués chacun de plusieurs éléments 111 à 113, 121 à 123 afin de réaliser à la détection un filtrage adapté qui permet d'augmenter le rapport signal/bruit et donc d'accroître la course et la sensibilité du capteur.

A titre d'exemple, le transducteur émetteur 110 comprend plusieurs transducteurs individuels 111, 112, 113 montés électriquement en parallèle et disposés le long du guide 30 à des intervalles choisis suivant un code de façon à engendrer une suite 161 d'impulsions élastiques. Le transducteur récepteur 120 est constitué d'un même nombre de transducteurs individuels 121, 122, 123 également montés électriquement en parallèle et disposés le long du guide 30 à proximité du transducteur 110, et avec des intervalles choisis de manière à constituer la réplique du code du transducteur émetteur 110. La suite 162 d'impulsions élastiques réfléchies par la surface du liquide arrive successivement sur les différents éléments 121 à 123 du transducteur 120 qui délivre en sortie une série d'impulsions de la forme représentée sur la figure 10. On voit que la superposition exacte de la suite 162 d'impulsions élastiques réfléchies avec les éléments 121 à 123 donne un signal d'autocorrélation 208 d'amplitude importante tandis qu'une superposition partielle donne des impulsions 207, 209 de faible amplitude.

La figure 11 représente une variante de réalisation du capteur des figures 1 et 2, dans laquelle le guide 30 n'est pas unique mais comprend un premier tronçon tubulaire 31 au voisinage de l'extrémité supérieure duquel est placé le transducteur émetteur 10, et un second tronçon tubulaire 32, parallèle et coaxial au premier tronçon tubulaire 31, et à la partie supérieure duquel est placé le transducteur récepteur 20. Les extrémités inférieures des tronçons tubulaires 31 et 32 situées près du fond de la cuve contenant le liquide 50 peuvent être entourées de matières absorbantes 33,34. Dans le cas de ce mode de réalisation, le couplage entre les deux tronçons de tube 31 et 32 est réalisé par le liquide 50. Une impulsion élastique incidente se propage dans le tronçon tubulaire 31 puis, après réflexion à la surface du liquide 50 revient partiellement sous la forme d'une onde réfléchie dans le second tronçon tubulaire 32.

Le guide 30 peut être métallique et par exemple réalisé en duralumin ou encore être en une autre matière présentant une certaine élasticité telle que le verre.

Le guide 30 est avantageusement à section circulaire comme représenté sur les figures 12 à 17 mais peut être également à section rectangulaire, par exemple carrée comme représenté sur la figure 18.

La longueur et la section du guide 30 sont adaptées aux applications envisagées. Toutefois, on peut noter que le guide peut présenter aussi bien une longueur de quelques dizaines de centimètres qu'une longueur de plusieurs mètres ou même plusieurs dizaines de mètres pour réaliser un capteur de niveau de liquide s'adaptant en particulier à des cuves de grandes dimensions. Les diamètres extérieur et intérieur d'un guide tubulaire peuvent être à titre d'exemple de 12 et 10 mm ou 32 et 30 mm mais peuvent également être de dimensions largement supérieures si le guide présente lui-même une longueur de plusieurs mètres.

Les transducteurs 10, 100, 110 qui peuvent être en particulier de type piézoélectrique, sont réalisés de manière que l'émission d'une impulsion élastique s'effectue selon un mode de flexion antisymétrique de manière à provoquer dans le tube 30 des déformations dans le sens radial qui se propagent longitudinalement le long du tube guide de manière à créer des déformations telles que celles qui sont représentées en pointillés sur les figures 15 à 17 et sont désignées par la référence 30a.

Comme on le voit sur les figures 15 à 17, le tube 30 se déforme progressivement le long de son axe ZZ' sensiblement selon une sinusoïde en conservant la même section. Les déformations radiales du tube guide 30 sont produites essentiellement dans un premier plan axial contenant les axes XX' des figures 16 et 17 tandis que les déformations radiales sont pratiquement nulles dans un second plan axial contenant les axes YY' des figures 16 et 17, perpendiculaire au premier plan axial. Un tel mode de flexion permet à l'onde élastique de se réfléchir de façon nette avec une grande amplitude à l'interface guide-liquide.

Le transducteur 10 ou 100 capable d'engendrer un tel mode de flexion peut présenter diverses configurations mais doit induire simultanément des déformations dans le même sens dans les deux parties diamétralement opposées du tube 30 le long d'un axe X'X. Pour cela, le transducteur 10 peut comprendre une paire de barreaux piézoélectriques 11, 12 convenablement polarisés et disposés contre des parties de paroi du tube 30 diamétralement opposées (Fig 12). L'un des barreaux élémentaires 11 est situé à l'extérieur du guide 30 tandis que l'autre barreau élémentaire 12 est situé à l'intérieur du guide 30, mais les deux barreaux élémentaires 11, 12 pourraient également être disposés tous les deux à l'extérieur du tube 30 ou à l'intérieur de celui-ci.

La figure 13 montre un transducteur émetteur 10 composé d'une paire de barreaux élémentaires incurvés 13, 14 qui épousent la forme du tube 30 et sont rapportés sur la face extérieure du tube 30 de façon diamétralement opposée.

La figure 14 montre un transducteur émetteur 10 composé d'une pièce unique en forme de C qui, par sa partie centrale incurvée 15 et par ses extrémités 16 permet d'obtenir dans le tube guide 30 des ondes de flexion similaires à celles qui sont obtenues par les transducteurs des figures 12 et 13.

On notera que la disposition relative des transducteurs émetteur 10 et récepteur 20 de la figure 1 peut être modifiée sans affecter la qualité de la détection.

Ainsi, sur la figure 1, on a représenté un transducteur émetteur 10 situé au-dessus du transducteur récepteur 20, et des moyens électroniques de discrimination permettent de ne pas tenir compte de l'impulsion initiale 61 qui atteint le transducteur récepteur 20 avant l'impulsion 62 réfléchie par le liquide.

Afin d'éviter une telle discrimination par des moyens électroniques, le transducteur récepteur 20 peut être disposé au sommet du tube-guide 30 au-dessus du transducteur émetteur 10 dans la mesure où celui-ci présente une configuration adaptée pour le rendre unidirectionnel, c'est-à-dire pour n'émettre une onde élastique que vers le bas.

Un transducteur unidirectionnel peut être réalisé par exemple par l'association de deux transducteurs tels que ceux représentés sur les figures 12 à 14 (qui peuvent eux-mêmes comprendre chacun un seul transducteur élémentaire comme sur la figure 14 ou une paire de transducteurs élémentaires comme sur les figures 12 et 13). Les deux transducteurs associés sont superposés le long de l'axe vertical ZZ' du tube-guide 30 en étant écartés spatialement d'une distance égale à $\lambda/4$ où $\lambda$ est la longueur d'onde des impulsions émises. La valeur de $\lambda$ peut être par exemple de l'ordre de 10 cm dans la mesure où les modes de flexions engendrés dans le tube se propagent à une vitesse relativement basse favorable à une bonne détection. Les signaux électriques appliqués aux deux transducteurs superposés et écartés de la distance $\lambda/4$ sont eux-mêmes déphasés de $\pi/2$, de telle

sorte que les ondes émises vers le haut par l'ensemble des deux transducteurs émetteurs superposés vont s'ajouter du point de vue électrique et du point de vue mécanique pour créer un déphasage de $\pi$ et donc se compenser mutuellement tandis que l'émission des ondes élastiques vers le bas ne sera pas affectée.

Le dispositif de mesure selon l'invention est particulièrement performant en particulier du fait du mode particulier antisymétrique de propagation qui concentre les déformations maximales selon un plan axial du tube et qui permet au tube de conserver une section constante malgré les déformations engendrées par les ondes de flexion, contrairement au cas de modes symétriques.

Dans le cas d'un tube guide à section rectangulaire, notamment carrée (figure 18), le transducteur émetteur 10 peut être composé d'une paire de barreaux piézoélectriques élémentaires 17, 18 analogues aux barreaux 11, 12 du mode de réalisation de la figure 12, disposés sur deux faces opposées du tube 30, et polarisés de manière à engendrer des déformations selon une direction perpendiculaire à ces deux faces et chaque fois dans un même sens pour chacune des deux faces opposées.

Le capteur de niveau selon l'invention est adapté à la mesure de niveaux de liquides mais aussi de produits semi-liquides ou très visqueux tels que des huiles lourdes, ou encore à la mesure du niveau de certains produits granulaires.

## Revendications

1. Capteur de niveau de liquide à ondes élastiques guidées, comprenant un guide allongé (30 ; 31, 32) constitué par au moins un tube lisse (30) exempt de discontinuités dans le sens longitudinal, et dont la partie inférieure est plongée dans le liquide (50), un premier transducteur (10 ; 100 ; 110) fixe situé hors du liquide pour émettre une impulsion élastique incidente (61) se propageant au sein dudit guide allongé (30 ; 31, 32), un second tranducteur (20 ; 100 ; 120) situé hors du liquide dans une position fixe voisine de celle du premier transducteur (10 ; 100 ; 110), pour recevoir l'impulsion élastique émise par le premier transducteur (10 ; 100 ; 110) et transmise par le guide (30 ; 31, 32), et des circuits électroniques (71 à 76) reliés aux premier et second transducteurs, caractérisé en ce que les circuits électroniques sont adaptés pour détecter les signaux délivrés par le second transducteur (20 ; 100 ; 120) lors de la réception par ce second transducteur de l'impulsion élastique émise par le premier transducteur (10 ; 100 ; 110) après réflexion de celle-ci (62) à la surface du liquide (50) dans lequel est plongée la partie inférieure du guide (30 ; 31, 32) et comprennent des moyens de mesure du temps écoulé entre l'émission d'une impulsion élastique incidente (61) par le premier transducteur (10 ; 100 ; 110) et la réception ultérieure de cette même onde élastique (62) par le second transducteur (20 ; 100 ; 120) et en ce que le premier transducteur (10, 100, 110) est agencé de manière à créer dans le guide (30) des déformations radiales alternatives périodiques antisymétriques essentiellement selon un premier plan axial (X'X) du guide tandis que les déformations radiales créées sont pratiquement nulles selon un second plan axial (Y'Y) perpendiculaire audit premier plan axial (X'X).

2. Capteur selon la revendication 1 caractérisé en ce que le guide (30) comprend un premier tronçon de guide (31) dont une extrémité supérieure porte le premier transducteur (10) et la partie inférieure est plongée dans le liquide (50), et un second tronçon de guide (32) parallèle au premier tronçon de guide (31) mais indépendant de celui-ci, dont une extrémité supérieure voisine de l'extrémité supérieure du premier tronçon de guide (31) porte le second transducteur (20) et la partie inférieure est plongée dans le liquide (50).

3. Capteur selon La revendication 1 caractérisé en ce que le guide (30) est constitué par un élément allongé unique dont l'extrémité supérieure porte les premier et second transducteurs fixes (10, 20 ; 100 ; 110, 120) et la partie inférieure est plongée dans le liquide.

4. Capteur selon l'une quelconque des revendications 1 à 3, caractérisé en ce que le premier transducteur (110) comprend plusieurs éléments (111, 112, 113) montés électriquement en parallèle et disposés sur le guide (30) en des emplacements prédéterminés définissant un code de manière à engendrer une suite d'impulsions élastiques et en ce que le second transducteur (120) comprend plusieurs éléments (121, 122, 123) montés électriquement en parallèle et disposés sur le guide (30) en des emplacements prédéterminés définissant la réplique dudit code défini par le premier transducteur (110) pour effectuer une autocorrelation du signal émis par le premier transducteur (110).

5. Capteur selon l'une quelconque des revendications 1 à 3, caractérisé en ce que les premier et second transducteurs sont constitués par un transducteur unique (100).

6. Capteur selon la revendication 5, caractérisé en ce que les circuits électroniques (71 à 76) de mesure du temps écoulé entre l'émission d'une impulsion élastique incidente (61) par le transducteur (100) et la réception ultérieure par le transducteur (100) de cette même onde élastique (62) guidée et réfléchie par l'interface guide (30) liquide (50) comprend en outre des portes (77, 78) pour aiguiller les impulsions électriques appliquées au transducteur (100) ou provenant de celui-ci.

7. Capteur selon l'une quelconque des revendications 1 à 6, caractérisé en ce que les transducteurs (10, 20 ; 100 ; 110, 120) sont de type piézoélectrique ou magnétostrictif.

8. Capteur selon l'une quelconque des revendications 1 à 7, caractérisé en ce que l'extrémité inférieure du guide (30 ; 31, 32) plongée dans le liquide (50) est enrobée dans une matière absorbante.

9. Capteur selon l'une quelconque des revendications 1 à 8, caractérisé en ce que le guide (30) est de forme tubulaire de section circulaire et le transducteur émetteur (10, 100 ; 110) est constitué par une portion d'anneau en forme de C.

10. Capteur selon l'une quelconque des revendications 1 à 8, caractérisé en ce que le guide (30) est de forme tubulaire et le transducteur émetteur (10, 100 ; 110) est constitué par au moins une paire de transducteurs élémentaires (11, 12 ; 13, 14 ; 17, 18) agissant sur deux faces opposées du tube guide (30).

11. Capteur selon l'une quelconque des revendications 1 à 7, caractérisé en ce que la partie de l'impulsion élastique incidente réfléchie par une extrémité fixe du guide (30) et captée par le second transducteur (20 ; 100 ; 120) est appliquée à un dispositif de mesures de correction ou de contrôle d'intégrité du guide.

12. Capteur selon l'une quelconque des revendications 1 à 11, caractérisé en ce que le guide (30) présente une longueur de plusieurs mètres et en ce que le rapport entre la plus grande dimension transversale du guide (30) et sa longueur est inférieur à environ 1/100.

## Ansprüche

1. Flüssigkeitspegelaufnehmer unter Benutzung elastisch geführter Wellen mit einer länglichen Führung (30 ; 31, 32), die durch wenigstens ein glattes Rohr (30) gebildet wird, das in Längsrichtung frei von Unterbrechungen ist, und dessen unterer Bereich in die Flüssigkeit (50) eingetaucht ist, einem ersten festen Meßwandler (10 ; 100 ; 110), der außerhalb der Flüssigkeit angeordnet ist, um einen elastisch auftreffenden Impuls (61) zu emittieren, der sich imerhalb der länglichen Führung (30 ; 31, 32) ausbreitet, einem zweiten Meßwandler (20 ; 100 ; 120), der außerhalb der Flüssigkeit angeordnet ist in einer festen Position in der Nähe von jener des ersten Meßwandlers (10 ; 100 ; 110), um den elastischen Impuls, der von dem ersten Meßwandler (10 ; 100 ; 110) emittiert wird und von der Führung (30 ; 31, 32) übertragen wird, aufzunehmen, und mit elektronischen Schaltkreisen (71-76), die mit dem ersten und zweiten Meßwandler verbunden sind, **dadurch gekennzeichnet**, daß die elektronischen Schaltkreise angepaßt sind, um die von dem zweiten Meßwandler (20 ; 100 ; 120) bei der Aufnahme durch den zweiten Meßwandler des von dem ersten Meßwandler (10 ; 100 ; 110) emittierten elastischen Impulses, zu erfassen, nach der Reflexion von diesem (62) an der Oberfläche der Flüssigkeit (50), in die der untere Bereich der Führung (30 ; 31, 32) eingetaucht ist, und mit Meßeinrichtungen der verstrichenen Zeit zwischen der Emission eines auftreffenden elastischen Impulses (61) durch den ersten Meßwandler (10 ; 100 ; 110) und der weiteren Aufnahme dieser selben elastischen Welle (62) durch den zweiten Meßwandler (20 ; 100 ; 120), und daß der erste Meßwandler (10, 100, 110) derart ausgebildet ist, daß er in der Führung (30) radiale, alternative, periodisch antisymmetrische Deformationen im wesentlichen gemäß einer ersten axialen Ebene (X'X) der Führung erzeugt, während die radialen erzeugten Deformationen praktisch Null sind gemäß einer zweiten axialen Ebene (Y'Y), die senkrecht zur ersten axialen Ebene (X'X) angeordnet ist.

2. Aufnehmer nach Anspruch 1, **dadurch gekennzeichnet**, daß die Führung (30) einen ersten Führungsstumpf (31) aufweist, dessen oberes Ende den ersten Meßwandler (10) trägt und der untere Bereich in die Flüssigkeit (50) eingetaucht ist, und einen zweiten Führungsstumpf (32) aufweist, parallel zum ersten Führungsstumpf (31), jedoch unabhängig von diesem, dessen eines oberes Ende in der Nähe des oberen Endes des ersten Führungsstumpfs (31) den zweiten Meßwandler (20) trägt und der untere Bereich in die Flüssigkeit (50) eingetaucht ist.

3. Aufnehmer nach Anspruch 1, **dadurch gekennzeichnet**, daß die Führung (30) aus einem länglichen einstückigen Element gebildet wird, deren oberes Ende den ersten und zweiten festen Meßwandler (10, 20 ; 100 ; 110, 120) trägt und deren unterer Bereich in die Flüssigkeit eingetaucht ist.

4. Aufnehmer nach einem der Ansprüche 1 bis 3, **dadurch gekennzeichnet**, daß der erste Meßwandler (110) mehrere Elemente (111, 112, 113) aufweist, die elektrisch parallel angeordnet sind und auf der Führung (30) an vorbestimmten Orten angeordnet sind, die einen Code derart definieren, daß sie eine Folge elastischer Impulse erzeugen, und daß der zweite Meßwandler (120) mehrere Elemente (121,122,123) aufweist, die elektrisch parallel angeordnet sind und an der Führung (30) an vorbestimmten Orten angeordnet sind, die die Antwort bzw. Replik des durch den ersten Meßwandler (110) definierten Codes definieren, um eine Selbstkorrelation des durch den ersten Meßwandler (110) emittierten Signals zu erzeugen.

5. Aufnehmer nach einem der Ansprüche 1 bis 3, **dadurch gekennzeichnet**, daß der erste und zweite Meßwandler aus einem einzigen Meßwandler (100) gebildet werden.

6. Aufnehmer nach Anspruch 5, **dadurch gekennzeichnet**, daß die elektronischen Schaltkreise (71-76) der Messung der zwischen der Emission eines auftreffenden elastischen Impulses (61) durch den Meßwandler (100) und der nachfolgenden Aufnahme durch den Meßwandler (100) dieser selben elastischen Welle (62) verstrichenen Zeit, die geführt und durch die Übergangsflächen Führung (30) Flüssigkeit (50) reflektiert wird, weiterhin Pforten (77, 78) aufweist, um die elektrischen Impulse, die auf den Meßwandler (100) aufgebracht werden oder von diesem herstammen, zu leiten.

7. Aufnehmer nach einem der Ansprüche 1 bis 6, **dadurch gekennzeichnet**, daß die Meßwandler (10, 20 ; 100 ; 110, 120) vom piezoelektrischen oder magnetostriktiven Typ sind.

8. Aufnehmer nach einem der Ansprüche 1 bis 7, **dadurch gekennzeichnet**, daß das untere Ende der Führung (30 ; 31, 3 2), das in die Flüssigkeit (50) eingetaucht ist, von einem absorbierenden Material umgeben ist.

9. Aufnehmer nach einem der Ansprüche 1 bis 8, **dadurch gekennzeichnet**, daß die Führung (30) von rohrförmiger Ausbildung mit kreisförmigem Querschnitt ist und der emittierende Meßwandler (10, 100 ; 110) durch einen Ringabschnitt in Form eines C gebildet ist.

10. Aufnehmer nach einem der Ansprüche 1 bis 8, **dadurch gekennzeichnet**, daß die Führung (30) von rohrförmiger Form ist und der emittierende Meßwandler (10, 100 ; 110) gebildet ist aus wenigstens einem Paar von elementaren Meßwandlern (11, 12 ; 13, 14 ; 17, 18), die auf zwei gegenüberliegenden Seiten des Führungsrohrs (30) agieren.

11. Aufnehmer nach einem der Ansprüche 1 bis 7, **dadurch gekennzeichnet**, daß der Bereich des von einem festen Ende der Führung (30) reflektierten auftreffenden elastischen Impulses und aufgenommen von dem zweiten Meßwandler (20 ; 100 ; 120) einer Meßvorrichtung zur Korrektur oder Integritätssteuerung der Führung aufgebracht wird.

12. Aufnehmer nach einem der Ansprüche 1 bis 11, **dadurch gekennzeichnet**, daß die Führung (30) eine Länge von mehreren Metern aufweist, und daß das Verhältnis zwischen der größten Querabmessung der Führung (30) und seiner Länge geringer ist als ungefähr 1/100.

**Claims**

1. A liquid level detector using guided elastic waves, comprising an elongated guide (30 ; 31, 32) constituted by at least one smooth tube (30) without discontinuities in the longitudinal direction and of which the lower part is immersed in the liquid (50), a first fixed transducer (10 ; 100 ; 110) situated out of the liquid for emitting an incident elastic pulse (61) which propagates inside said elongated guide (30 ; 31, 32), a second transducer (20 ; 100 ; 120) situated out of the liquid in a fixed position close to that of the first transducer (10 ; 100 ; 110) so as to receive the elastic pulse delivered by the first transducer (10 ; 100 ; 110) and transmitted by the guide (30 ; 31, 32) and electronic circuits (7 to 76) connected to the first and second transducers, characterised in that the electronic circuits are adapted for detecting the signals delivered by the second transducer (20 ; 100 ; 120) during the reception by said second transducer of the elastic pulse delivered by the first transducer (10 ; 100 ; 110) after reflection thereof (62) on the surface of the liquid (50) in which is immersed the lower part of the guide (30 ; 31, 32) and comprising means for measuring the time elapsing between the emission of an incident elastic pulse (61) by said first transducer (10 ; 100 ; 110) and the subsequent reception of this same elastic wave (62) by the second transducer (20 ; 100 ; 120) and in that said first transducer (10 ; 100 ; 110) is arranged in a manner to create in the guide (30) antisymmetric periodical alternate radial deformations substantially in a first axial plane (X'X) of the guide, whereas the created radial deformations are practically non-existent according to a second axial plane (Y'Y) perpendicular to said first axial plane (X'X).

2. A detector according to claim 1, characterised in that the guide (30) comprises a first guide section (31) having an upper end which supports said first transducer (10) and a lower end which is immersed in the liquid (50), and a second guide section (32) located parallel to said first guide section (31) but separate thereof, said second guide section having an upper end located near the upper end of said first guide section (31), and supporting said second transducer (20) and a lower part which is immersed in the liquid (50).

3. A detector according to claim 1, characterised in that the guide (30) is constituted by a single elongated element having an upper end carrying said fixed first and second transducers (10, 20 ; 100 ; 110, 120) and a lower part immersed in the liquid.

4. A detector according to any one of claims 1 to 3, characterised in that the first transducer (110) comprises comprises a plurality of elements (111, 112, 113) which are electrically mounted in parallel and are placed on guide (30) in predetermined spots defining a code to generate a succession of elestic pulses and in that said second transducer (120) comprises a plurality of elements (121, 122, 123) which are electrically mounted in parallel and are placed on the guide (30) in predetermined spots defining a response to the code defined by said first transducer (110) so as to perform an autocorrelation of the signal delivered by the first transducer (110).

5. A detector according to any one of claims 1 to 3, characterised in that said first and second transducers are constituted by a single transducer (100).

6. A detector according to claim 5, characterised in that the electronic circuits (71 to 76) for measuring time elapsing between emission of an incident elastic pulse (61) by transducer (100) and the subsequent reception by said transducer (100) of this same elastic wave (62) after a propagation in the guide and a reflection on the surface of the liquid, further comprises gates (77, 78) for guiding electric pulses applied to transducer (100) or issued therefrom.

7. A detector according to any one of claims 1 to 6, characeised in that the transducers (10, 20 ; 100 ; 110, 120) are of the piezoelectric or magnetostrictive type.

8. A detector according to any one of claims 1 to 7, characterised in that the lower end of guide (30 ; 31, 32) which is immersed in the liquid (50) is covered over with an absorbing material.

9. A detector according to any one of claims 1 to 8, characterised in that the guide (30) has a tubular shape with a circular cross-section and the transmitting transducer is constituted by a C-shaped portion of a ring.

10. A detector according to any one of claims 1 to 8, characterised in that the guide (30) has a tubular shape and the transmitting transducer comprises at least one pair of elementary transducers (11, 12 ; 13, 14 ; 17, 18) acting on two opposed faces of the tubular guide (30).

11. A detector according to any one of claims 1 to 7, characterised in that the part of the incident elastic pulse reflected by a fixed end of the guide (30) which is picked up by said second transducer (20 ; 100 ; 120) is applied to a corrective measurement device or to a device for controlling the guide integrity.

12. A detector according to any one of claims 1 to 11, characterised in that the guide (30) is several meters long and in that the ratio between the largest transversal dimension of the guide (30) and the guide length is less than about 1/100.

Fig.1

Fig.3

Fig.4

10

Fig.2

Fig.5

Fig.6

Fig.7

Fig.8

Fig.11

Fig.9

Fig.10

Fig.12

Fig.13

Fig.14

Fig.12

Fig.13

Fig.14

Fig-15

Fig-16

Fig-17

Fig-18